# EUROPÄISCHE PATENTSCHRIFT

(11) **EP 2 050 255 B1**
(45) Veröffentlichungstag und Bekanntmachung des Hinweises auf die Patenterteilung: **14.10.2015**
(21) Anmeldenummer: 07788272.8
(22) Anmeldetag: 07.08.2007
(51) Int. Cl.: H04L 29/12

(54) **VERFAHREN ZUM AUFFINDEN EINES KOMMUNIKATIONSTEILNEHMERS, VERWENDUNG EINES SOLCHEN VERFAHRENS UND BEDIENGERÄT MIT EINER IMPLEMENTATION DES VERFAHRENS**
METHOD FOR LOCATING A COMMUNICATION SUBSCRIBER, USE OF A METHOD OF THIS TYPE, AND OPERATING DEVICE WITH AN IMPLEMENTATION OF THE METHOD
PROCÉDÉ DE LOCALISATION D'UN ABONNÉ DE COMMUNICATION, UTILISATION D'UN TEL PROCÉDÉ ET BOÎTIER DE COMMANDE AVEC UNE IMPLÉMENTATION DU PROCÉDÉ

(30) Priorität: 09.08.2006 DE 102006037279
(43) Veröffentlichungstag der Anmeldung: 22.04.2009
(73) Patentinhaber: Siemens Schweiz AG, 8047 Zürich (CH)
(72) Erfinder: HOCH, Peter, 93080 Pentling (DE)
(74) Vertreter: Maier, Daniel Oliver
(86) Internationale Anmeldenummer: PCT/EP2007/058168
(87) Internationale Veröffentlichungsnummer: WO 2008/017666

(56) Entgegenhaltungen:
- WO-A-02/11402
- GB-A- 2 418 821
- US-A- 5 987 524
- US-A1- 2006 137 005
- DROMS R: "RFC 1541 Dynamic Host Configuration Protocol" INTERNET CITATION, [Online] Oktober 1993 (1993-10), XP002126410 Gefunden im Internet: URL:http://www.cis.ohio-state.edu/htbin/rf c/rfc1541.html> [gefunden am 1999-12-21]
- CROFT B ET AL: "RFC 951 - Boostrap protocol (BOOTP)" INTERNET CITATION, [Online] September 1985 (1985-09), XP002193185 Gefunden im Internet: URL:http://www.ietf.org/rfc/rfc951.txt> [gefunden am 2002-03-14]

## Beschreibung

Die Erfindung betrifft ein Verfahren zum Betrieb eines Kommunikationsverbunds, nämlich zum Auffinden eines Kommunikationsteilnehmers in einem Kommunikationsverbund, mit einer Mehrzahl von Kommunikationsteilnehmern. In Bezug auf den Kommunikationsverbund wird hier und im Folgenden insbesondere von vernetzten Automatisierungsgeräten ausgegangen, die zur Steuerung und/oder Überwachung eines technischen Prozesses über einen Bus, insbesondere einen so genannten Feldbus, kommunikativ miteinander verbunden sind und untereinander Daten vom oder für den technischen Prozess austauschen.

Ein Beispiel für ein solches Bussystem ist der so genannte europäische Installationsbus, EIB, wie er in der EN 50090 angegeben ist. Der EIB ist speziell für die so genannte Gebäudeautomation vorgesehen und vernetzt insoweit Sensoren und Aktoren, wie sie zum Beispiel zur Steuerung von Beschattungseinrichtungen, Schließ- und Alarmanlagen und dergleichen an sich bekannt sind. Solche Sensoren und Aktoren fungieren als Kommunikationsteilnehmer an dem Bussystem. Die Funktionalität einzelner Kommunikationsteilnehmer, zum Beispiel eines Schalters als Sensor, kann dabei leicht geändert werden, so dass zum Beispiel ein Schalter, der nach einer ersten Konfiguration zur Aktivierung einer Beleuchtungseinrichtung vorgesehen war, in einer anderen Konfiguration eine Heizeinrichtung deaktiviert usw.

Bei einer komplexen Gebäudeautomation, wobei das Gebäude im folgenden als Beispiel für einen zu steuernden und/oder zu überwachenden technischen Prozess aufgefasst wird und entsprechend die Begriffe Gebäude und technischer Prozess synonym verwendet werden, kann aufgrund der Vielzahl von Sensoren und Aktoren (grundsätzlich ist jeder Lichtschalter ein Sensor und jedes Beleuchtungsmittel ein Aktor) das Auffinden einzelner Kommunikationsteilnehmer erschwert werden. Zudem ist es möglich, dass sich Referenzen in Bezug auf die einzelnen Kommunikationsteilnehmer, also zum Beispiel so genannte IP-Adressen, von Zeit zu Zeit ändern.

Innerhalb eines Kommunikationsverbunds sind solche Referenzen, insbesondere in Form von Adressen, also zum Beispiel IP-Adressen, zwar eindeutig, aber ein Zusammenhang mit einem bei der ursprünglichen Erstellung der Automatisierungslösung angelegten Projektierungsdatensatz geht verloren, wenn später Änderungen an den Referenzen oder einzelnen Referenzen vorgenommen werden. Dieses Problem erhöht sich noch, wenn ein Installateur mehrere Liegenschaften, also mehrere Gebäudeautomatisierungen über ein eigenes Netzwerk betreuen will und insoweit ein gemeinsamer Zugriff auf zumindest einen ersten und einen zweiten Kommunikationsverbund erfolgt, wobei nur innerhalb des jeweiligen Kommunikationsverbunds ein Eindeutigkeit der Referenzen gewährleistet ist.

Eine Aufgabe der Erfindung besteht also darin, ein Verfahren zum Auffinden eines Kommunikationsteilnehmers anzugeben, das auch nach einer Änderung einzelner Referenzen oder einer Mehrdeutigkeit von Referenzen eine zuverlässige Zuordnung oder Erkennung eines Kommunikationsteilnehmers erlaubt.

Zur Adressvergabe in einem Kommunikationsverbund sind standardisierte Verfahren, z.B. DHCP oder BOOTP, bekannt, die auch in der WO 02/11402 A beschrieben werden. Des Weiteren sind standardisierte Verfahren zur Adressumsetzung in Kommunikationsnetzwerken bekannt, nämlich z.B. NAT, das auch in der GB 2 418 821 A beschrieben wird. Schließlich ist z.B. aus der US 2006/0137005 A bekannt, Netzwerkadressen auch zur Zugriffskontrolle auf ein Netzwerk oder von dem Netzwerk umfasste Geräte zu verwenden. Im Zusammenhang mit dem hier beschriebenen Ansatz stellt dies jedoch nur allgemeinen technologischen Hintergrund dar, denn für das Verfahren zum Auffinden eines Kommunikationsteilnehmers in einem Kommunikations verbund ist es unerheblich, wie diesem ursprünglich eine Adresse zugewiesen wurde. Des Weiteren ist unerheblich, wie und warum bei einem Kommunikationsteilnehmer, der anhand der Projektierungsdaten nicht mehr unmittelbar angesprochen werden kann, die jeweilige veränderliche Referenz umgestellt wurde.

Aus der US 5,987,524 ist ein Verfahren zum Überprüfen von Datentelegrammen bekannt. Die Überprüfung zielt darauf ab, zur Vermeidung von Missbrauch, etwa bei einer Nutzung kostenpflichtiger Dienste, eine Übermittlung eines Datentelegramms an einen nicht zugelassenen Kommunikationsteilnehmer zu verhindern. Damit Prüfungen, die in diesem Zusammenhang erfolgen müssen, schnell und effizient durchgeführt werden können, verwaltet ein Router eine erste und eine zweite Tabelle. Zunächst erfolgt die Prüfung, ob das Datentelegramm weitergeleitet werden kann, anhand der zweiten Tabelle. Wenn der Kommunikationsteilnehmer dort nicht vermerkt ist, erfolgt die Prüfung anhand der ersten Tabelle. Wenn der Kommunikationsteilnehmer dort vorhanden ist, wird die zweite Tabelle ergänzt, so dass die Prüfung für diesen Kommunikationsteilnehmer in Zukunft schneller, nämlich anhand der zweiten Tabelle erfolgen kann. Einträge in der zweiten Tabelle werden dabei zeitabhängig wieder gelöscht.

Die o.g. Aufgabe wird erfindungsgemäß mit den Merkmalen des Anspruchs 1 gelöst. Dazu sind bei einem Verfahren zum Auffinden eines Kommunikationsteilnehmers in einem Kommunikationsverbund, mit einer Mehrzahl von Kommunikationsteilnehmern, wobei jedem vom Kommunikationsverbund umfassten Kommunikationsteilnehmer zumindest eine veränderliche Referenz und eine feste Referenz zugeordnet sind, folgende Verfahrensschritte vorgesehen. Im Zusammenhang mit einer Projektierung werden in einem Projektierungsdatensatz in diesbezüglichen Projektierungsdaten die veränderliche und die feste Referenz des jeweiligen Kommunikationsteilnehmers hinterlegt. Damit ist der Kommunikationsverbund zumindest zum Zeitpunkt der Erstellung des Projektierungsdatensatzes hinsichtlich der von dem Kommunikationsverbund umfassten Kommunikationsteilnehmer beschrieben. Ein Zugriff auf einzelne Kommunikationsteilnehmer im Kommunikationsverbund ist anhand der veränderlichen Referenz möglich. Als veränderliche Referenz kommt dabei zum Beispiel eine Adresse in Betracht, anhand derer der Kommunikationsteilnehmer im Kommunikationsverbund eindeutig identifizierbar ist und anhand derer der Kommunikationsteilnehmer im Kommunikationsverbund für eventuelle Datenübertragungen erreichbar ist. Bevorzugt fungiert eine IP-Adresse als veränderliche Referenz oder es ist vorgesehen, dass die veränderliche Referenz eine IP-Adresse umfasst. Im Zusammenhang mit einem Zugriff auf einen Kommunikationsteilnehmer, also insbesondere zu einem Zeitpunkt der mitunter deutlich nach einem Zeitpunkt liegt, zu dem der Projektierungsdatensatz erstellt wurde, wenn also davon ausgegangen wird oder zu besorgen ist, dass einzelne oder mehrere der veränderlichen Referenzen modifiziert wurden oder wenn bei einem Zugriff auf mehr als einen Kommunikationsverbund eine Eindeutigkeit der veränderlichen Referenzen über die im Zugriff befindlichen Kommunikationsverbünde nicht gewährleistet ist oder die Möglichkeit besteht, dass eine solche Eindeutigkeit nicht gewährleistet ist, wird zumindest einmalig bei allen erreichbaren Kommunikationsteilnehmern die veränderliche und die feste Referenz ausgelesen und in einer Tabelle hinterlegt. Bei einem Zugriff auf einen Kommunikationsteilnehmer erfolgt dessen Auswahl zunächst anhand der jeweiligen Projektierungsdaten aus dem Projektierungsdatensatz. Anhand der Projektierungsdaten wird daraufhin die dort für diesen Kommunikationsteilnehmer hinterlegte feste Referenz ermittelt. Mit der festen Referenz erfolgt ein Zugriff auf die Tabelle, die nach der oben beschriebenen Datenaufnahme ("Discovery-Lauf") für jeden erreichbaren Kommunikationsteilnehmer dessen feste Referenz sowie die (momentane) veränderliche Referenz umfasst. Anhand der Tabelle und der festen Referenz wird die (momentane) veränderliche Referenz des jeweiligen Kommunikationsteilnehmers ermittelt. Der Zugriff auf den Kommunikationsteilnehmer erfolgt jetzt mittels der anhand der Tabelle ermittelten veränderlichen Referenz. Damit ist gewährleistet, dass bei einer nach Erstellung des Projektierungsdatensatzes erfolgten Modifikation veränderlicher Referenzen einzelner oder mehrerer Kommunikationsteilnehmer in einem Kommunikationsverbund ein Zugriff auf diese Kommunikationsteilnehmer noch anhand des ursprünglichen Projektierungsdatensatzes möglich bleibt, indem der Zugriff auf den Kommunikationsteilnehmer nicht direkt anhand des Projektierungsdatensatzes sondern unter Zwischenschaltung der in dem oben genannten "Discovery-Lauf" erstellten Tabelle erfolgt. Im Falle einer Mehrdeutigkeit veränderlicher Referenzen, also zum Beispiel bei einem gleichzeitigen Zugriff auf mehr als einen Kommunikationsverbund, kann vorgesehen sein, dass die Tabelle einen den jeweiligen Kommunikationsverbund identifizierenden Eintrag umfasst und dass beim Zugriff auf einen der Kommunikationsteilnehmer aus der Tabelle nicht nur dessen momentane veränderliche Referenz sondern auch der den Kommunikationsverbund identifizierende Eintrag herangezogen wird.

Die abhängigen Ansprüche sind auf bevorzugte Ausführungsformen der vorliegenden Erfindung gerichtet.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass eine so genannte MAC-Adresse als feste Referenz fungiert oder dass die feste Referenz eine solche MAC-Adresse umfasst. MAC-Adressen werden bei der Herstellung eines Kommunikationsteilnehmers, speziell bei der Herstellung einer Funktionalität zur Busanschaltung eines solchen Kommunikationsteilnehmers, ausgewählt und im Wesentlichen fortlaufend oder nach einer sonst geeigneten Systematik vergeben, so dass davon ausgegangen wird, dass in Bezug auf solche MAC-Adressen keine Mehrdeutigkeiten auftreten können. Aus diesem Grund eignet sich die MAC-Adresse im Zusammenhang mit der vorliegenden Erfindung besonders als feste Referenz.

Gemäß einer vorteilhaften Ausführungsform der Erfindung ist vorgesehen, dass eine Aktualisierung der veränderlichen Referenz in dem Projektierungsdatensatz anhand der Tabelle erfolgt. Eine Aktualisierung des Projektierungsdatensatzes kann unmittelbar nach der Erstellung der Tabelle für sämtliche vom Projektierungsdatensatz umfassten Kommunikationsteilnehmer erfolgen. Alternativ kann auch vorgesehen sein, dass eine Aktualisierung für jeweils genau einem Kommunikationsteilnehmer dann erfolgt, wenn ein Zugriff auf diesen Kommunikationsteilnehmer zumindest einmal anhand der Tabelle erfolgt ist, so dass auf diesem Weg Daten zur Aktualisierung der veränderlichen Referenz in den betreffenden Projektierungsdaten im Projektierungsdatensatz zur Verfügung stehen. Dies setzt voraus, dass beim Zugriff auf einen der Kommunikationsteilnehmer ein Zugriff zunächst anhand der im Projektierungsdatensatz hinterlegten veränderlichen Referenz erfolgt und dass ein Zugriff auf diesen Kommunikationsteilnehmer anhand der Tabelle erst dann vorgenommen wird, wenn anhand der im Projektierungsdatensatz gespeicherten veränderlichen Referenz kein Kontakt mit dem angesprochenen Kommunikationsteilnehmer zustande kommt, so dass daraus ableitbar ist, dass die gespeicherte veränderliche Referenz entweder nicht mehr aktuell ist oder eine sonstige Ausnahmesituation, zum Beispiel eine Mehrdeutigkeit der gespeicherten veränderlichen Referenz, vorliegt.

Die Erfindung betrifft auch eine Verwendung des oben oder nachfolgend beschriebenen Verfahrens zum Zugriff auf einen Kommunikationsteilnehmer nach einer Änderung der jeweiligen veränderlichen Referenz oder bei einer mehrdeutigen veränderlichen Referenz. Der Vorteil einer Verwendung des Verfahrens in diesem Zusammenhang ergibt sich daraus, dass veränderte Referenzen erkannt werden und gegebenenfalls sogar korrigiert werden und dass der Zugriff auf den oder jeden Kommunikationsteilnehmer auch bei einer nach Erstellung des Projektierungsdatensatzes modifizierten veränderlichen Referenz möglich bleibt. Darüber hinaus ist, insbesondere wenn die Tabelle einen Eintrag zur eindeutigen Identifizierung eines Kommunikationsverbunds aus einer Mehrzahl von gleichzeitig im Zugriff befindlichen Kommunikationsverbünden umfasst, anhand eines solchen Eintrags über die Tabelle auch eine Auflösung mehrdeutiger Referenzen und eine korrekte Adressierung jedes Kommunikationsteilnehmers möglich.

Das Verfahren wird bevorzugt in Software implementiert, so dass die Erfindung auch ein Computerprogramm mit durch einen Computer ausführbaren Programmcode-Anweisungen zur Implementierung des oben oder nachfolgend beschriebenen Verfahrens betrifft. Des Weiteren betrifft die Erfindung auch ein Computerprogrammprodukt, insbesondere ein Speichermedium, mit einem durch einen Computer ausführbaren derartigen Computerprogramm.

Schließlich betrifft die Erfindung auch ein Bediengerät zur Verwendung im Zusammenhang mit der Konfiguration oder Überwachung eines Kommunikationsverbunds mit einer Mehrzahl von Kommunikationsteilnehmern, das in an sich bekannter Art und Weise einen Speicher umfasst, in dem ein derartiges Computerprogramm implementiert oder implementierbar ist. Das Computerprogramm ist dann durch eine von dem Bediengerät ebenfalls in an sich bekannter Art und Weise umfasste Verarbeitungseinheit, also zum Beispiel einen Prozessor, ausführbar. Bei dem Bediengerät handelt es sich bevorzugt um ein Bediengerät, wie dies üblicherweise bei der Inbetriebnahme, Wartung oder Programmierung von Automatisierungslösungen, insbesondere zur Gebäudeautomatisierung, verwendet wird.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: einen Kommunikationsverbund mit einer Anzahl von Kommunikationsteilnehmern,
- FIG 2: einen Projektierungsdatensatz mit Projektierungsdaten für jeden vom Kommunikationsverbund, auf den sich der Projektierungsdatensatz bezieht, umfassten Kommunikationsteilnehmer und
- FIG 3: eine Tabelle zum Betrieb des Kommunikationsverbunds, insbesondere zum Auffinden eines Kommunikationsteilnehmers in dem Kommunikationsverbund.

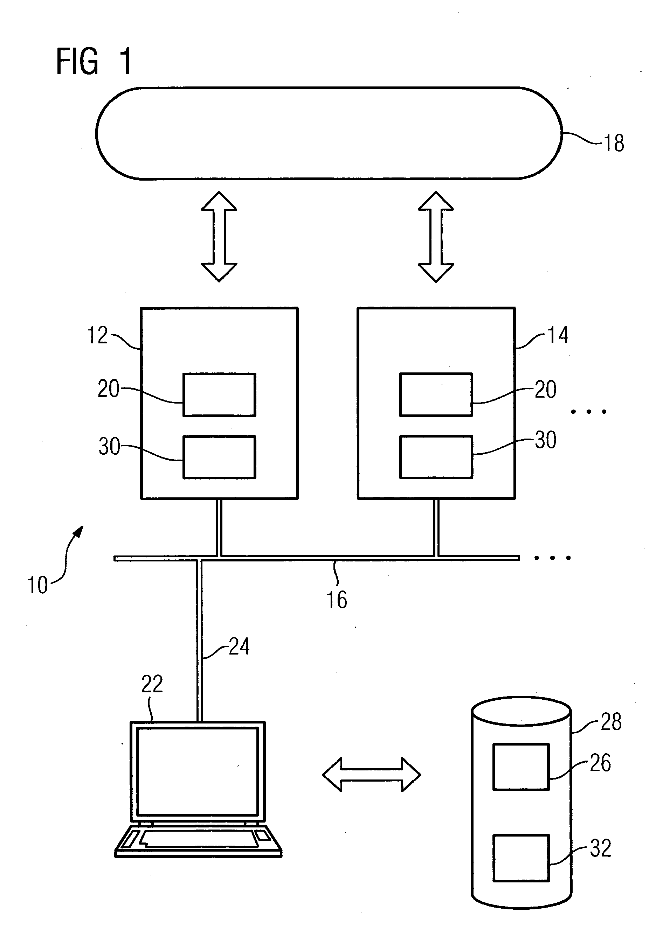

FIG 1 zeigt einen schematisch vereinfacht dargestellten Kommunikationsverbund, der in der Darstellung gemäß FIG 1 aus Gründen der Übersichtlichkeit als Kommunikationsteilnehmer nur einen ersten und einen zweiten Kommunikationsteilnehmer 12, 14 umfasst. In der Praxis ist die Anzahl der von einem Kommunikationsverbund 10 umfassten Kommunikationsteilnehmer 12, 14 häufig erheblich höher. Die einzelnen Kommunikationsteilnehmer 12, 14 sind untereinander über einen Bus 16, zum Beispiel einen so genannten Feldbus, insbesondere den unter der Bezeichnung "europäischer Installationsbus" (EIB) bekannten Feldbus, kommunikativ verbunden.

Der Kommunikationsverbund 10 oder, je nach Sichtweise, die davon umfassten Kommunikationsteilnehmer 12, 14 sind zur Steuerung und/oder Überwachung eines ebenfalls nur schematisch dargestellten technischen Prozesses 18 vorgesehen. Bei einem zur Gebäudeautomatisierung vorgesehenen Kommunikationsverbund 10 handelt es sich bei dem technischen Prozess 18 entsprechend um ein Gebäude oder ein Gebäudeteil. Zwischen dem technischen Prozess 18 und dem Kommunikationsverbund 10, namentlich mit den davon umfassten Kommunikationsteilnehmern 12, 14, findet ein Datenaustausch an sich bekannter Art zur Aufnahme von Daten zum Zustand des technischen Prozesses 18 und zur Abgabe von Daten an den technischen Prozess 18 zu dessen Beeinflussung statt.

Zur Identifizierung einzelner Kommunikationsteilnehmer 12, 14 im Kommunikationsverbund ist jedem Kommunikationsteilnehmer 12, 14 eine Adresse oder dergleichen, insbesondere eine IP-Adresse, zugeordnet. Eine solche IP-Adresse ist ein Beispiel für eine veränderliche Referenz 20 zur Bezeichnung des jeweiligen Kommunikationsteilnehmers 12, 14. Die veränderliche Referenz 20 wird üblicherweise spätestens zu einem Projektierungszeitpunkt den einzelnen Kommunikationsteilnehmern 12, 14 zugewiesen. Zu einem späteren Zeitpunkt kann je nach Bedarf die veränderliche Referenz 20 modifiziert werden. Die IP-Adresse als veränderliche Referenz 20 fungiert als Adresse für einen Datenaustausch über den Bus 16. Damit ein solcher Datenaustausch eindeutig innerhalb des Kommunikationsverbunds 10 erfolgen kann, ist zumindest zu fordern, dass die veränderlichen Referenzen 20 der von dem Kommunikationsverbund 10 umfassten Kommunikationsteilnehmer 12, 14 für diesen Kommunikationsverbund eindeutig sind. Im Bezug auf einen weiteren Kommunikationsverbund (nicht dargestellt) kann sich in Bezug auf dort eventuell zumindest teilweise gleich vergebene veränderliche Referenzen 20 durchaus eine Mehrdeutigkeit ergeben, die beim unabhängigen Betrieb solche Kommunikationsverbünde zu keinen Problemen führt.

Eine Inbetriebnahme, Wartung oder Programmierung des Kommunikationsverbunds 10 oder der von dem Kommunikationsverbund 10 umfassten Kommunikationsteilnehmer 12, 14 erfolgt üblicherweise mit einem Bediengerät 22 oder dergleichen, das mit einer temporären Verbindung 24 zumindest zeitweise an den Bus 16 angeschlossen oder anschließbar ist. Über die temporäre Verbindung 24 kann das Bediengerät 22 Zugriff auf den gesamten Kommunikationsverbund 10 und damit jeden davon umfassten Kommunikationsteilnehmer 12, 14 nehmen. Über das Bediengerät 22 ist damit insbesondere eine Vorgabe der veränderlichen Referenzen 20 oder eine spätere Modifikation derselben möglich. Die veränderlichen Referenzen 20 und gegebenenfalls weitere Daten der einzelnen von dem Kommunikationsverbund 10 umfassten Kommunikationsteilnehmer 12, 14 werden in einem Projektierungsdatensatz 26 gespeichert, der zum Beispiel in einem dem Bediengerät 22 zugeordneten oder von diesem erreichbaren Speicher 28 hinterlegt ist.

Anhand des Projektierungsdatensatzes 26 erfolgt nach dessen erstmaliger Erstellung spätestens im Zusammenhang mit der Projektierung des Kommunikationsverbundes 10 sowie üblicherweise auch zu jedem späteren Zeitpunkt ein Zugriff auf den Kommunikationsverbund 10 oder einzelne oder mehrere davon umfasste Kommunikationsteilnehmer 12, 14. Nachdem der Projektierungsdatensatz 22 damit quasi ein "Momentanabbild" des Kommunikationsverbunds 10 zum Beispiel zum Zeitpunkt der Projektierung darstellt, kann bei einem späteren Zugriff auf den Kommunikationsverbund 10 mittels des Bediengeräts 22 eine Veränderung der Verhältnisse stattgefunden haben, derart dass einzelne oder mehrere veränderliche Referenzen 20 modifiziert sind. Eine derartige Situation erfordert bisher eine aufwendige Neukonfiguration einer zum Beispiel auf dem Bediengerät 22 ablaufenden Visualisierung. Ähnliches gilt für ein ebenfalls auf dem Bediengerät 22 ablauffähiges Projektierungstool. In diesem Zusammenhang bereitet insbesondere das Auffinden der einzelnen Kommunikationsteilnehmer 12, 14 Schwierigkeiten, da diesen häufig zugeordnete Bezeichnungen wie zum Beispiel "Schalter Deckenlicht" keine eindeutige Zuordnung erlauben, so dass weder anhand der in dem Projektierungsdatensatz 26 noch hinterlegten (ursprünglichen) variablen Referenz 20 noch anhand einer solchen Bezeichnung eine Identifikation einzelner oder mehrerer Kommunikationsteilnehmer 12, 14 möglich ist.

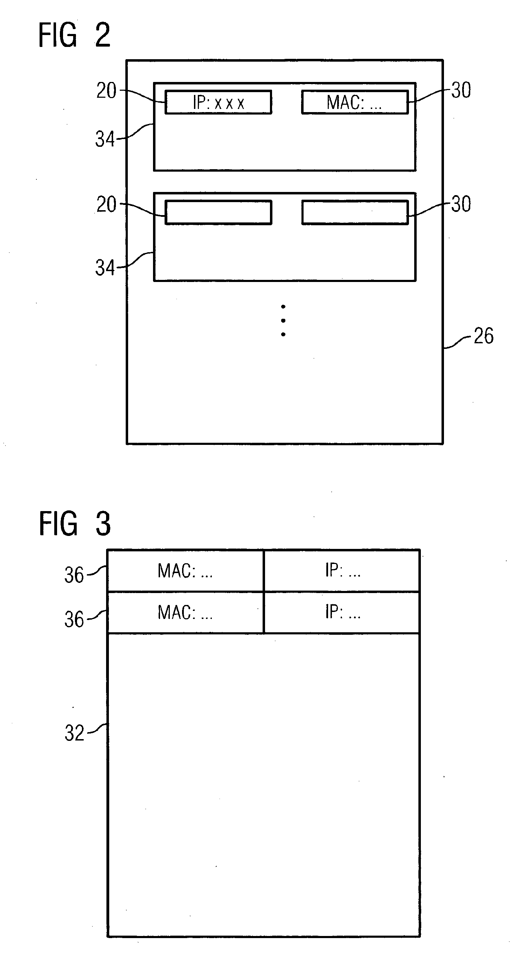

Hier setzt die Erfindung an, indem sie vorschlägt, eine normalerweise von jedem Kommunikationsteilnehmer 12, 14 umfasste feste Referenz 30 auszunutzen. Als feste Referenz 30 kommt dabei zum Beispiel eine so genannte MAC-Adresse in Betracht, die jedem Kommunikationsteilnehmer 12, 14 im Zusammenhang mit dessen Herstellung zugeordnet wird. Gemäß der Erfindung ist vorgesehen, dass in dem Projektierungsdatensatz 26 für jeden von dem Kommunikationsverbund 10 umfassten Kommunikationsteilnehmer 12, 14 nicht nur dessen veränderliche Referenz 20 sondern auch dessen feste Referenz 30 gespeichert sind. Der Projektierungsdatensatz 26 umfasst also zum Beispiel für jeden Kommunikationsteilnehmer 12, 14 dessen IP-Adresse als veränderliche Referenz 20 und dessen MAC-Adresse als feste Referenz 30. Bei einem Zugriff auf den Kommunikationsverbund kann, wenn einer der Kommunikationsteilnehmer 12, 14 unter der veränderlichen Referenz 20 nicht auf an dessen veränderliche Referenz 20 als Adresse gerichtete Datentelegramme reagiert, einmalig bei allen erreichbaren Kommunikationsteilnehmern - wobei erreichbar in diesem Zusammenhang meint, dass eine kommunikative Verbindung über den Bus 16 intakt ist - die veränderliche und die feste Referenz 20, 30 ausgelesen und in einer Tabelle 32 hinterlegt werden. Weitere Details werden im Folgenden anhand der Figuren 2 und 3 erläutert.

FIG 2 zeigt in schematisch vereinfachter Form den Projektierungsdatensatz 26 mit Projektierungsdaten 34 für jeden vom Kommunikationsverbund 10, auf den sich der Projektierungsdatensatz 26 bezieht, umfassten Kommunikationsteilnehmer 12, 14. Jedes Projektierungsdatum 34 umfasst für jeden Kommunikationsteilnehmer 12, 14 (FIG 1) als veränderliche Referenz 20 eine IP-Adresse und als feste Referenz 30 eine MAC-Adresse. Der Projektierungsdatensatz 26 wird spätestens im Zusammenhang mit der Projektierung angelegt. Bei einem späteren erneuten Zugriff auf den Kommunikationsverbund 10 (FIG 1) erfolgt ein Zugriff auf einzelne oder mehrere davon umfasste Kommunikationsteilnehmer 12, 14 zumindest zunächst anhand der im jeweiligen Projektierungsdatum 34 hinterlegten variablen Referenz 20. Kommt mit der als variable Referenz 20 fungierenden IP-Adresse keine Kommunikation mit dem auf diese Art und Weise adressierten Kommunikationsteilnehmer 12, 14 zustande, ist offensichtlich, dass eine Ausnahmesituation vorliegt, die zum Beispiel darin bestehen kann, dass sich für den betreffenden Kommunikationsteilnehmer 12, 14 dessen variable Referenz 20 geändert hat, so dass die dem Kommunikationsteilnehmer 12, 14 zugeordnete variable Referenz 20 nicht mehr mit der in dem Projektierungsdatensatz 26 gespeicherten variablen Referenz 20 übereinstimmt. Alternativ kommt als Ursache für eine solche Ausnahmesituation auch eine Mehrdeutigkeit veränderlicher Referenzen 20 in Betracht. Zur Lösung dieses Problems wird die Tabelle 32 verwendet, die in FIG 3 näher dargestellt ist. Die Tabelle 32 wird aufgebaut, indem bei allen erreichbaren Kommunikationsteilnehmern 12, 14 (FIG 1) die veränderliche und die feste Referenz 20, 30 (FIG 1) ausgelesen werden. Die ausgelesenen Daten werden dann in der Tabelle 32 gespeichert, wobei die Tabelle 32 für jeden Kommunikationsteilnehmer 12, 14 einen Eintrag 36 aufweist, der Speicherplatz zum Hinterlegen der jeweiligen variablen oder festen Referenz 20, 30 bereitstellt.

Beim Zugriff auf den Kommunikationsteilnehmer 12, 14 von Seiten des Bediengeräts 22 wird zunächst für den jeweiligen Kommunikationsteilnehmer 12, 14 im Projektierungsdatensatz 26 dessen variable Referenz 20 nachgeschlagen. Kommt unter Verwendung dieser variablen Referenz 20 als Adresse keine Kommunikation mit dem betreffenden Kommunikationsteilnehmer 12, 14 zustande, wird anhand der dem jeweiligen Kommunikationsteilnehmer 12, 14 im Projektierungsdatensatz 26 zugeordneten festen Referenz 30 auf die Tabelle 32 zugegriffen. In der Tabelle 32 wird anhand der für den jeweiligen Kommunikationsteilnehmer 12, 14 vergebenen festen Referenz 30 dessen momentane variable Referenz 20 nachgeschlagen und die zuvor fehlgeschlagene Kommunikation mit dem Kommunikationsteilnehmer 12, 14 unter Verwendung dieser variablen Referenz 20 erneut versucht. Normalerweise sollte damit ein Zugriff auf den Kommunikationsteilnehmer 12, 14 möglich sein.

In nicht dargestellter Art und Weise kann die Tabelle 32 gemäß FIG 3 in jedem Eintrag 36 auch Daten zur Referenzierung eines Kommunikationsverbunds 10 (FIG 1) umfassen. Mit einem solchen Datum ist auch bei Verwendung mehrdeutiger variabler Referenzen 20, zum Beispiel beim gleichzeitigen Zugriff auf mehr als einen Kommunikationsverbund 10, ein eindeutiger Zugriff auf einen speziellen Kommunikationsteilnehmer in einem der im Zugriff befindlichen Kommunikationsverbünde möglich.

Zusammenfassend lässt sich die Erfindung damit wie folgt beschreiben: Es wird ein Verfahren zum Betrieb eines Kommunikationsverbunds 10 mit einer Mehrzahl von Kommunikationsteilnehmern 12, 14, wobei jedem Kommunikationsteilnehmer 12, 14 zumindest eine veränderliche Referenz 20 und eine feste Referenz 30 zugeordnet sind, vorgeschlagen, bei dem im Zusammenhang mit einer Projektierung in einem Projektierungsdatensatz 26 die veränderliche und die feste Referenz 20, 30 des jeweiligen Kommunikationsteilnehmers 12, 14 hinterlegt wird und bei dem im Zusammenhang mit einem Zugriff auf einen Kommunikationsteilnehmer 12, 14 bei allen erreichbaren Kommunikationsteilnehmern 12, 14 die veränderliche und die feste Referenz 20, 30 ausgelesen und in einer Tabelle 32 hinterlegt wird. Der Zugriff auf einen Kommunikationsteilnehmer 12, 14 erfolgt zunächst anhand des Projektierungsdatensatzes 26, aus dem die jeweilige feste Referenz 30 ermittelt wird, wobei anhand der festen Referenz 30 ein Zugriff auf die Tabelle 32 und anhand der Tabelle 32 und der jeweiligen festen Referenz 30 eine Ermittlung der (aktuellen) veränderlichen Referenz 20 des Kommunikationsteilnehmers 12, 14 erfolgt, so dass im Ergebnis auf den jeweiligen Kommunikationsteilnehmer 12, 14 mittels der anhand der Tabelle 32 ermittelten veränderlichen Referenz 20 zugegriffen werden kann.

## Patentansprüche

1. Verfahren zum Auffinden eines Kommunikationsteilnehmers (12) in einem Kommunikationsverbund (10) mit einer Mehrzahl von Kommunikationsteilnehmern (12, 14), wobei jedem vom Kommunikationsverbund (10) umfassten Kommunikationsteilnehmer (12, 14) zumindest eine veränderliche Referenz (20) und eine feste Referenz (30) zugeordnet sind und spätestens im Zusammenhang mit einer ursprünglichen Projektierung des Kommunikationsverbunds (10) in einem Projektierungsdatensatz (26) in diesbezüglichen Projektierungsdaten (34) die veränderliche und die feste Referenz (20, 30) des jeweiligen Kommunikationsteilnehmers (12) hinterlegt werden,
wobei das Verfahren ausgeführt wird, wenn sich die veränderliche Referenz (20) des aufzufindenden Kommunikationsteilnehmers (12) seit einer ursprünglichen Projektierung geändert hat oder wenn bei einem Zugriff auf mehr als einen Kommunikationsverbund (10) eine Eindeutigkeit der veränderlichen Referenzen (20) über die im Zugriff befindlichen Kommunikationsverbünde (10) nicht gewährleistet ist,
**gekennzeichnet durch** folgende Verfahrensschritte,
im Zusammenhang mit einem Zugriff auf einen Kommunikationsteilnehmer (12) wird zumindest einmalig bei allen erreichbaren Kommunikationsteilnehmern (12, 14) die veränderliche und die feste Referenz (20, 30) ausgelesen und in einer Tabelle (32) hinterlegt,
beim Zugriff auf einen Kommunikationsteilnehmer erfolgt dessen Auswahl anhand der Projektierungsdaten (34),
anhand der Projektierungsdaten (34) wird zunächst die jeweilige feste Referenz (30) ermittelt,
anhand der festen Referenz (30) erfolgt sodann ein Zugriff auf die Tabelle (32),
anhand der Tabelle (32) und der jeweiligen festen Referenz (30) wird schließlich die veränderliche Referenz (20) des jeweiligen Kommunikationsteilnehmers (12) ermittelt und
der Zugriff auf den jeweiligen Kommunikationsteilnehmer (12) erfolgt mittels der anhand der Tabelle (32) ermittelten veränderlichen Referenz (20).

2. Verfahren nach Anspruch 1, wobei eine MAC-Adresse als feste Referenz (30) fungiert oder die feste Referenz (30) eine MAC-Adresse umfasst.

3. Verfahren nach Anspruch 1, wobei eine IP-Adresse als veränderliche Referenz (20) fungiert oder die veränderliche Referenz (20) eine IP-Adresse umfasst.

4. Verfahren nach Anspruch 1, 2 oder 3, wobei eine Aktualisierung der veränderlichen Referenz (20) in dem Projektierungsdatensatz (26) anhand der Tabelle (32) erfolgt.

5. Verwendung eines Verfahrens nach einem der Ansprüche 1 bis 4 zum Zugriff auf einen Kommunikationsteilnehmer (12) nach einer Änderung der jeweiligen veränderlichen Referenz oder bei einer mehrdeutigen veränderlichen Referenz (12).

6. Computerprogramm mit durch einen Computer ausführbaren Programmcodeanweisungen zur Implementierung des Verfahrens nach einem der Ansprüche 1 bis 4 wenn das Computerprogramm auf einem Computer ausgeführt wird.

7. Computerprogrammprodukt, insbesondere Speichermedium, mit einem durch einen Computer ausführbaren Computerprogramm gemäß Anspruch 6.

8. Bediengerät zur Verwendung im Zusammenhang mit der Projektierung oder Überwachung eines Kommunikationsverbunds (10) mit einer Mehrzahl von Kommunikationsteilnehmern (12, 14), das einen Speicher und ein dort implementiertes Computerprogramm nach Anspruch 6 umfasst.

## Claims

1. Method for locating a communication subscriber (12) in a communication link-up (10) with a plurality of communication subscribers (12, 14), at least one variable reference (20) and one fixed reference (30) being assigned to each communication subscriber (12, 14) included in the communication link-up (10), and the variable and the fixed reference (20, 30) of the respective communication subscriber (12) being stored at the latest in connection with an original projecting of the communication link-up (10) in a projection data record (26) in the projection data (24) related hereto,
wherein the method is carried out if the variable reference (20) of the communication subscriber (12) to be located has changed since its original projecting or if upon access to more than one communication link-up (10) a uniqueness of the variable references (20) relating to the communication linkups (10) located during access is not ensured,
**characterised by** the following method steps,
in connection with access to a communication subscriber (12, 14), the variable and the fixed references (20, 30) for all reachable communication subscribers (12, 14) are read and stored in a table (32) at least once,
upon access to a communication subscriber, its selection is effected on the basis of the projection data (34),
the respective fixed reference (30) is determined on the basis of the projection data (34),
the table (32) is then accessed on the basis of the fixed reference (30),
and the variable reference (20) of the respective communication subscriber (12, 14) is finally determined on the basis of the table (32) and the respective fixed reference (30)
and the respective communication subscriber (12, 14) is accessed by means of the variable reference (20) determined on the basis of the table (32).

2. Method according to claim 1, with a MAC address functioning as a fixed reference (30) or the fixed reference (30) including a MAC address.

3. Method according to claim 1, with an IP address functioning as a variable reference (20) or the variable reference (20) including an IP address.

4. Method according to claim 1, 2 or 3, with the variable reference (20) being updated in the projection data record (26) on the basis of the table (32).

5. Use of a method according to one of claims 1 to 4 for access to a communication subscriber (12) following a change in the respective variable reference or in the case of an ambiguous variable reference (12).

6. Computer program with program code instructions which can be executed by means of a computer for implementing the method according to one of claims 1 to 4 if the computer program is executed on a computer.

7. Computer program product, in particular storage means, comprising a computer program which can be executed by a computer according to claim 6.

8. Control device for use in connection with the projection or monitoring of a communication link-up (10) with a plurality of communication subscribers (12, 14), which includes a memory and a computer program implemented there according to claim 6.

## Revendications

1. Procédé de localisation d'un abonné de communication (12) dans un réseau de communication (10) comprenant une pluralité d'abonnés de communication (12, 14), chaque abonné de communication (12, 14) du réseau de communication (10) s'étant vu attribuer au moins une référence variable (20) et une référence fixe (30) et au plus tard dans le contexte d'une configuration initiale du réseau de communication (10), les références variable et fixe (20, 30) de l'abonné de communication respectif (12) étant mémorisées dans un jeu de données de configuration (26), dans des données de configuration correspondantes (34),
le procédé étant exécuté si la référence variable (20) de l'abonné de communication (12) à localiser a changé depuis une configuration initiale ou si dans le cas d'un accès à plus d'un réseau de communication (10) le caractère univoque des références variables (20) n'est pas garanti par les réseaux de communication (10) accessibles,
procédé **caractérisé par** les étapes suivantes :
dans le contexte d'un accès à un abonné de communication (12), les références variable et fixe (20, 30) sont extraites et mémorisées dans une table (32) au moins une fois pour tous les abonnés de communication joignables (12, 14),
lors de l'accès à un abonné de communication, celui-ci est sélectionné à l'aide des données de configuration (34),
à l'aide des données de configuration (34), est déterminée d'abord la référence fixe respective (30),
à l'aide de la référence fixe (30), a lieu ensuite un accès à la table (32),
à l'aide de la table (32) et de la référence fixe respective (30), est déterminée enfin la référence variable (20) de l'abonné de communication respectif (12), et
l'accès à l'abonné de communication respectif (12) a lieu au moyen de la référence variable (20) déterminée à l'aide de la table (32).

2. Procédé selon la revendication 1, dans lequel une adresse MAC sert de référence fixe (30) ou bien la référence fixe (30) comprend une adresse MAC.

3. Procédé selon la revendication 1, dans lequel une adresse IP sert de référence variable (20) ou bien la référence variable (20) comprend une adresse IP.

4. Procédé selon la revendication 1, 2 ou 3, dans lequel une actualisation de la référence variable (20) dans le jeu de données de configuration (26) a lieu à l'aide de la table (32).

5. Utilisation d'un procédé selon l'une des revendications 1 à 4 pour accéder à un abonné de communication (12) après un changement de la référence variable respective ou dans le cas d'une référence variable équivoque (12).

6. Programme informatique comprenant des instructions de code de programme exécutables par un ordinateur pour l'implémentation du procédé selon l'une des revendications 1 à 4 lorsque le programme informatique est exécuté sur un ordinateur.

7. Produit programme informatique, en particulier support de stockage, comprenant un programme informatique exécutable par un ordinateur selon la revendication 6.

8. Boîtier de commande destiné à être utilisé dans le contexte de la configuration ou la surveillance d'un réseau de communication (10) comprenant une pluralité d'abonnés de communication (12, 14), qui comporte une mémoire et un programme informatique implémenté dans la mémoire selon la revendication 6.
